# EUROPÄISCHE PATENTSCHRIFT

(11) **EP 3 001 737 B1**
(45) Veröffentlichungstag und Bekanntmachung des Hinweises auf die Patenterteilung: **26.02.2020**
(21) Anmeldenummer: 15184360.4
(22) Anmeldetag: 08.09.2015
(51) Int. Cl.: H04W 52/02

(54) **NETZKNOTEN, KOMMUNIKATIONSNETZ UND VERFAHREN ZUM BETREIBEN EINES NETZKNOTENS SOWIE EINES KOMMUNIKATIONSNETZES**
NETWORK NODE, COMMUNICATION NETWORK AND METHOD FOR OPERATING A NETWORK NODE AND A COMMUNICATION NETWORK
N UD DE RESEAU, RESEAU DE COMMUNICATION ET PROCEDE DE FONCTIONNEMENT D'UN NOEUD DE RESEAU ET D'UN RESEAU DE COMMUNICATION

(30) Priorität: 25.09.2014 DE 102014014306
(43) Veröffentlichungstag der Anmeldung: 30.03.2016
(73) Patentinhaber: Bleuel, Johannes, 78465 Konstanz (DE)
(72) Erfinder: Bleuel, Johannes, 78465 Konstanz (DE)
(74) Vertreter: Spengler, Robert

(56) Entgegenhaltungen:
- EP-A1- 1 933 507
- EP-A2- 2 426 865
- WO-A2-03/061176
- US-A1- 2007 051 872
- US-A1- 2014 112 224

## Beschreibung

Die vorliegende Erfindung betrifft ein Kommunikationsnetz mit wenigstens einer Netzwerksteuereinheit, die dazu eingerichtet ist, Steuersignale an Netzknoten zu übertragen, und wenigstens einem Netzknoten, ein Verfahren zum Betreiben eines solchen Kommunikationsnetzes, sowie ein Computerprogrammprodukt mit Steuerbefehlen, die bei Ausführung durch einen Prozessor ein derartiges Verfahren durchführen.

Ein Netzknoten für ein drahtloses Kommunikationsnetz, und insbesondere für ein drahtloses Sensornetz, ist beispielsweise aus der DE 10 2010 019 193 A1 bekannt. Besagter Netzknoten weist eine drahtlose Kommunikationseinrichtung auf, die in zwei Kommunikationsmodi mit jeweils unterschiedlichen Sendeleistungen betreibbar ist. In einem ersten Kommunikationsmodus sendet der Netzknoten erste Kommunikationssignale zur Kommunikation mit anderen Netzknoten im Kommunikationsnetz aus, während er in einem zweiten Kommunikationsmodus zweite Kommunikationssignale zur Kommunikation mit einem Transponder aussendet. Hierbei ist seine Sendeleistung im zweiten Kommunikationsmodus größer als im ersten Kommunikationsmodus.

Ferner ist aus der DE 10 2008 057 042 A1 eine stromsparende Sensorschaltung mit einem Sensor bekannt. Nach Einschalten einer Sensornetzphase schaltet der Sensor eine Sensorschaltphase ein, die nach Feststellung keines sensorauslösenden Ereignisses über einen vorbestimmbaren Zeitraum wieder abgeschaltet wird. Hierbei wird der Sensor von einer Spannungsversorgung getrennt.

Aus der US 2014/0112224 A1 geht ein Kommunikationsnetz mit einem Netzknoten hervor, der drei verschiedene Betriebszustände einnehmen kann. In einem ersten Betriebszustand sind weder Steuer- noch Datensignale vom Netzknoten empfangbar oder versendbar, im zweiten Betriebszustand sind Steuersignale vom Netzknoten zumindest empfangbar und im dritten Betriebszustand sind Datensignale vom Netzknoten versendbar.

Es ist die Aufgabe der vorliegenden Erfindung, ein Kommunikationsnetz, ein Verfahren zum Betreiben eines Kommunikationsnetzes sowie ein Computerprogrammprodukt zu schaffen, mit denen sich der Energieverbrauch von Kommunikationsnetzen merklich verringern lässt und eine verlässliche Datenübertragung mit einer geringen Latenzzeit sichergestellt wird.

Diese Aufgabe wird durch ein Kommunikationsnetz mit den Merkmalen des Anspruchs 1, durch ein Verfahren zum Betreiben eines Kommunikationsnetzes mit den Merkmalen des Anspruchs 6 und durch ein Computerprogrammprodukt mit den Merkmalen des Anspruchs 11 gelöst. Bevorzugte Ausführungsformen sind Gegenstand der abhängigen Ansprüche.

Gemäß der vorliegenden Erfindung nimmt der Netzknoten einen anfänglichen ersten Betriebszustand ein, in welchem er Steuersignale und Datensignale weder empfangen noch versenden kann. Dabei handelt es sich bei Steuersignalen um Signale zum Steuern des Betriebs des Netzknotens oder anderer Netzknoten oder Komponenten des Kommunikationsnetzes, während Datensignale zur Übertragung von Daten vorgesehen sind. Bei einem externen Steuersignal handelt es sich ferner um ein vom Netzknoten empfangenes Steuersignal. Vom Netzknoten empfangene oder externe Steuersignale können ganz allgemein von einem innerhalb des Kommunikationsnetzes befindlichen Sender oder von einem außerhalb des Kommunikationsnetzes befindlichen Sender an den Netzknoten versendet werden. Im ersten Betriebszustand ist es dem Netzknoten daher zwar nicht möglich, an einem Austausch von Daten oder Steuersignalen innerhalb des Kommunikationsnetzes teilzuhaben, dafür ist sein Energiebedarf im ersten Betriebszustand minimal. Es ist sogar möglich, dass der Netzknoten im ersten Betriebszustand überhaupt keine Energie benötigt oder verbraucht. Zudem ist der Netzknoten dazu eingerichtet, auf das Erfolgen oder Eintreten der Wechselbedingung mit einem Wechsel vom ersten Betriebszustand in den zweiten Betriebszustand zu reagieren, in welchem er Steuersignale empfangen und auch weiterleiten bzw. versenden kann. Datensignale kann der Netzknoten im zweiten Betriebszustand jedoch weder empfangen noch versenden. Mittels der Steuersignale lässt sich der weitere Betrieb des sich im zweiten Betriebszustand befindlichen Netzknotens innerhalb des Kommunikationsnetzes zumindest teilweise steuern. So kann der Netzknoten beispielsweise empfangene Steuersignale einfach an andere Netzknoten weiterleiten oder anderweitig auf empfangene Steuersignale reagieren. Insbesondere kann der Netzknoten mittels eines entsprechenden Steuersignals in den dritten Betriebszustand versetzt werden. Ebenso kann der Netzknoten einer Ausführungsform bei Empfang eines anderen Steuersignales vom zweiten Betriebszustand in den ersten Betriebszustand zurückversetzt werden. Dabei erfolgt ein Austausch oder eine Kommunikation bzw. Übertragung von Daten zwischen dem Netzknoten und anderen Netzkomponenten nur im dritten Betriebszustand des Netzknotens durch Versenden und Empfangen von Datensignalen. Vorteilhafterweise kann der Netzknoten auch im dritten Betriebszustand Steuersignale empfangen und/oder versenden, so dass es möglich ist, den Netzknoten mittels entsprechender Steuersignale vom dritten Betriebszustand in den zweiten Betriebszustand oder direkt in den ersten Betriebszustand zurückzuversetzen.

Im zweiten Betriebszustand ist es dem Netzknoten daher zwar nicht möglich, an einem Austausch von Daten innerhalb des Kommunikationsnetzes teilzunehmen, dafür kann er in diesem Zustand Steuersignale empfangen und versenden und sein Energiebedarf ist im zweiten Betriebszustand geringer als im dritten Betriebszustand. Durch ein Steuersignal kann der Netzknoten vom zweiten in den dritten Betriebszustand gebracht werden, wenn seine Teilnahme am Austausch von Datensignalen erforderlich ist.

Grundsätzlich ist aufgrund der unterschiedlichen Funktionalitäten des Netzknotens in den drei Betriebszuständen der Energieverbrauch des Netzknotens im ersten Betriebszustand niedriger als im zweiten Betriebszustand, und im zweiten Betriebszustand ist sein Energieverbrauch niedriger als im dritten Betriebszustand. Mithin ist der Energieverbrauch des Netzknotens im ersten Betriebszustand also am niedrigsten, während sein Energieverbrauch im dritten Betriebszustand am höchsten ist. Der Energieverbrauch des Netzknotens liegt im zweiten Betriebszustand somit zwischen dem Energieverbrauch im ersten Betriebszustand und dem Energieverbrauch im dritten Betriebszustand. Solange weder der Empfang noch das Versenden von Steuersignalen oder Datensignalen durch den Netzknoten erforderlich sind, kann der erfindungsgemäße Netzknoten in den ersten Betriebszustand versetzt werden oder diesen einnehmen. Wird die Teilnahme des sich im ersten Betriebszustand befindlichen Netzknotens an Kommunikationen des Kommunikationsnetzes notwendig, weil der Netzknoten Steuersignale oder Datensignale empfangen oder versenden muss, wird der Eintritt der Wechselbedingung herbeigeführt, woraufhin der Netzknoten vom ersten Betriebszustand in den zweiten Betriebszustand wechselt. Gegebenenfalls wird der Netzknoten unmittelbar darauf mittels eines entsprechenden Steuersignales zum Wechsel vom zweiten Betriebszustand in den dritten Betriebszustand veranlasst. Indem der Netzknoten entsprechend seinen anstehenden Aufgaben in einen jeweiligen der drei Betriebszustände gebracht wird, ist ein energieeffizienter Betrieb des Netzknotens sowie eines den Netzknoten aufweisenden Kommunikationsnetzes möglich. Netzknoten lassen sich insbesondere in einen Betriebszustand bringen, in dem sie mit geringstmöglichem Energieaufwand Steuersignale empfangen und mit kurzer Reaktionszeit für den Austausch von Datensignalen bereit stehen können. Der Energieverbrauch sowohl von Netzknoten als auch von Kommunikationsnetzen lässt sich dadurch merklich verringern.

Als Wechselbedingung, bei deren Erfolgen der Netzknoten vom ersten Betriebszustand in den zweiten Betriebszustand wechselt, können beliebige geeignete Umstände vorgesehen sein. Beispielsweise kann die Wechselbedingung mit Verstreichen einer vorgegebenen Zeitspanne oder mit Einsetzen einer Stromversorgung des Netzknotens erfolgen. So kann der Netzknoten zum Beispiel über einen internen Zeitmesser verfügen, um nach Verstreichen vorgegebener Zeitspannen bzw. zu vorgegebenen Zeiten vom ersten Betriebszustand in den zweiten Betriebszustand wechseln zu können. Insbesondere kann der Netzknoten dazu ausgelegt sein, den Wechsel vom ersten Betriebszustand in den zweiten Betriebszustand in vorgegebenen, bevorzugt periodischen, Zeitintervallen durchzuführen. Ferner können die vorgegebenen Zeitspannen oder der interne Zeitmesser des Netzknotens mit Zeitmessern anderer Netzknoten oder Netzkomponenten abgestimmt oder synchronisiert sein um sicherzustellen, dass alle relevanten Netzknoten des Kommunikationsnetzes gleichzeitig den zweiten oder dritten Betriebszustand einnehmen. Die Ausführungsform der Erfindung, bei welcher die Wechselbedingung mit Einsetzen einer Stromversorgung des Netzknotens eintritt, ist dabei deswegen vorteilhaft, weil der Netzknoten in diesem Fall im ersten Betriebszustand keinerlei Energieverbrauch aufweist.

Grundsätzlich kann es sich bei dem Kommunikationsnetz um ein teilweise oder vollständig drahtgebundenes oder um ein vollständig drahtloses Kommunikationsnetz handeln. Entsprechend kann der Netzknoten vorteilhafterweise für eine drahtlose Kommunikation eingerichtet sein. Dabei kann das Kommunikationsnetz wenigstens einen Verstärkerknoten oder "repeater" aufweisen, um Steuersignale und Datensignale an vom Kommunikationsnetz ansonsten nicht erreichbare Netzknoten weiterzuleiten.

Vorzugsweise weist der Netzknoten wenigstens eine Sende-/Empfangsvorrichtung und/oder wenigstens eine Steuereinheit und/oder wenigstens einen Speicher und/oder wenigstens einen Sensor und/oder wenigstens eine Messvorrichtung und/oder wenigstens eine optische Vorrichtung und/oder wenigstens eine akustische Vorrichtung und/oder wenigstens einen Aktuator und/oder wenigstens ein Ventil auf. Dabei können Sende-/Empfangsvorrichtungen oder Transceiver zum Versenden und/oder Empfangen von Steuersignalen und/oder Datensignalen an oder von anderen Netzknoten oder anderen Netzkomponenten wie einer Netzwerksteuerung bzw. Netzwerkmaster oder zum Empfangen von Aktivierungssignalen vorgesehen sein. Besonders bevorzugt ist hierbei eine Sende-/Empfangsvorrichtung, die nach dem IEEE 802.15.4, dem IEEE 802.11 oder WLAN (Wireless Local Area Network), dem Bluetooth Low Energy oder dem DECT Ultra low energy Standard betreibbar ist. Es können mehrere Kommunikationskanäle sowie Kanalsprungverfahren vorgesehen sein. Desweiteren können zum Versenden und Empfangen von Datensignalen und zum Versenden und Empfangen von Steuersignalen jeweils unterschiedliche Sende-/Empfangsvorrichtungen oder Transceiver vorgesehen sein.

Die Steuereinheit kann ergänzend zur Steuerung durch vom Netzknoten empfangene externe Steuersignale zusätzlich mit einer internen Steuerung vorgesehen sein, die für Detailabläufe des inneren Betriebs des Netzknotens zuständig sein kann. Hierzu kann die Steuereinheit mit einem Computerprogrammprodukt bzw. Software oder mit einem Prozessor zur Ausführung von Steuerbefehlen eines Computerprogrammprodukts ausgestattet sein.

Ferner kann der Speicher zum Zwischenspeichern von Daten vorgesehen sein, die vom Netzknoten empfangen oder die am bzw. vom Netzknoten generiert werden und die zum Weiterleiten an einen oder mehrere andere Netzknoten oder Komponenten des Kommunikationsnetzes vorgesehen sind. Dabei kann der Netzknoten empfangene Daten mit einem Zeitstempel versehen abspeichern. Ferner kann der Netzknoten Daten in regelmäßigen, vorgegebenen Intervallen einlesen.

Besonders bevorzugt handelt es sich bei dem Kommunikationsnetz um ein Sensornetz und ganz besonders bevorzugt um ein drahtloses Sensornetz. Sofern es sich bei dem Kommunikationsnetz um ein Sensornetz handelt, weist der Netzknoten bevorzugt einen Sensor oder eine Messvorrichtung zur Erzeugung von zu versendenden Daten auf. Ferner kann es sich bei der optischen oder akustischen Vorrichtung um eine die Umgebung des Netzknotens erfassende Aufnahmevorrichtung, also beispielsweise eine Kamera oder ein Mikrophon, handeln, oder aber es kann sich um eine Ausgabevorrichtung wie zum Beispiel eine Leuchte bzw. LED-Lampe oder einen Lautsprecher handeln. Mittels derartiger Ausgabevorrichtungen können beispielsweise momentane Betriebszustände des Netzknotens angezeigt werden. Schließlich kann der Netzknoten, sofern er einen Aktuator oder ein Ventil aufweist, direkten Einfluss auf seine Umgebung ausüben.

Das Kommunikationsnetz weist wenigstens eine Netzwerksteuereinheit auf, die oftmals als sogenannter "network master" bezeichnet wird. Dabei kann der Netzknoten wenigstens einer Netzwerksteuereinheit oder mehreren Netzwerksteuereinheiten zugeordnet sein. Vorzugsweise ist die Netzwerksteuereinheit zur Kommunikation mit wenigstens einer Schnittstelle eingerichtet, die wiederum zur Kommunikation mit wenigstens einem Server eingerichtet ist. Zudem kann die Netzwerksteuereinheit dazu eingerichtet sein, um Steuersignale und/oder Datensignale an Netzknoten zu übertragen sowie um Daten aus Netzknoten auszulesen bzw. um Datensignale von Netzknoten zu empfangen, die empfangenen Daten zu verarbeiten und sie an die wenigstens eine Schnittstelle zu übertragen, welche sie wiederum an den wenigstens einen Server übertragen kann. Die Netzwerksteuereinheit kann ferner zur Konfiguration einer drahtlosen Netzwerktopologie derart vorgesehen sein, dass der Energieverbrauch einzelner Netzknoten minimiert wird sowie redundante drahtlose Verbindungen zwischen Netzknoten und der Netzwerksteuereinheit nach Art eines Maschennetzes geschaffen werden, um eine verlässliche Datenübertragung mit einer geringen Latenzzeit sicherzustellen. Dabei kann sich die Netzwerktopologie im Laufe der Zeit ändern, wenn die Netzwerksteuereinheit beispielsweise Zeitschlitze zum Senden und Empfangen von Signalen für jeden Netzknoten dynamisch ändert. Insbesondere können bei Vorliegen mehrerer Netzwerksteuereinheiten jeweilige Teilnetzwerktopologien, die mit den jeweiligen Netzwerksteuereinheiten verbundene Netzknoten umfassen, jeweils verschieden sein.

Vorzugsweise ist für die Netzwerksteuereinheit eine Software vorgesehen, welche die Netzwerksteuereinheit und insbesondere deren Kommunikation mit den Netzknoten und/oder der Schnittstelle und/oder dem Server steuert.

Ferner werden von der Netzwerksteuereinheit zur Übertragung von Steuersignalen und zur Übertragung von Datensignalen an die Netzknoten besonders bevorzugt Signale mit jeweils unterschiedlichen Signaleigenschaften, wie zum Beispiel unterschiedlichen Frequenzen, verwendet. Hierbei kann es vorteilhaft sein, für vorgegebene, spezifische Steuersignale Signale mit denselben Signaleigenschaften wie für die Übertragung von Datensignalen zu verwenden. Zu diesen spezifischen Steuersignalen können Steuersignale gehören, welche Authentifizierungen, Zeiteinstellungen, Datensammeleinstellungen, Zeitschlitzzuweisungen für Übertragungen sowie Antennenausrichtungseinstellungen betreffen. Ferner kann es vorteilhaft sein, die Signaleigenschaften spezifischer Steuersignale so zu wählen, dass Netzknoten diese Steuersignale im zweiten Betriebszustand mit geringstmöglichem Energieaufwand empfangen können.

Bei einer anderen Ausführungsform sorgt die Netzwerksteuereinheit für eine Zeitsynchronisierung wenigstens eines Teils der Netzknoten oder aller mit ihr verbundener Netzknoten. Eine Zeitsynchronisierung kann notwendig sein, um Übertragungen zwischen Netzknoten sowie zwischen Netzknoten und der Netzwerksteuereinheit festzulegen und dadurch die Zeiten, in welchen sich die Netzknoten in energieintensiven Betriebszuständen befinden, zu minimieren. Bevorzugt wird das Erzeugen und Versenden von Daten durch die Netzknoten, bzw. die Übertragung von Datensignalen zwischen Netzknoten, mit Hilfe eines Steuersignales oder mehrerer Steuersignale initiiert oder synchronisiert, so dass die Zeitspanne, in der sich Netzknoten im dritten Betriebszustand befinden, minimiert wird, da es sich bei diesem um einen energieintensiven Betriebszustand handelt. Insbesondere lassen sich dadurch dynamische Datenübertragungsraten realisieren.

Ferner kann die Netzwerksteuereinheit oder der mit ihr verbundene Server festlegen, zu welchem Zeitpunkt weitere Daten benötigt werden und mittels geeigneter Steuersignale das Erzeugen und Versenden von Daten durch einen oder mehrere Netzknoten anfordern. Indem das Erzeugen und Versenden unnötiger Daten vermieden wird, kann der Energieverbrauch der Netzknoten minimiert werden.

Zudem ist es möglich, dass sich eine Topologie wenigstens eines Teilbereiches des Kommunikationsnetzes oder des gesamten Kommunikationsnetzes in Abhängigkeit von der Zeit ändert. Dies kann beispielsweise dann der Fall sein, wenn das Kommunikationsnetz wenigstens einen mobilen Netzknoten aufweist, der seine räumliche Position im Laufe der Zeit ändert. So ist es bei Sensornetzen nicht ungewöhnlich, auch bewegliche Gegenstände mit Netzknoten zu versehen.

Die Erfindung wird nachfolgend anhand von bevorzugten Ausführungsbeispielen unter Zuhilfenahme von Zeichnungen näher erläutert. Dabei zeigen:
- Figur 1: ein Diagramm, das Betriebszustände eines Netzknotens in Abhängigkeit von der Zeit darstellt;
- Figur 2: ein Kommunikationsnetz mit mehreren Netzknoten.

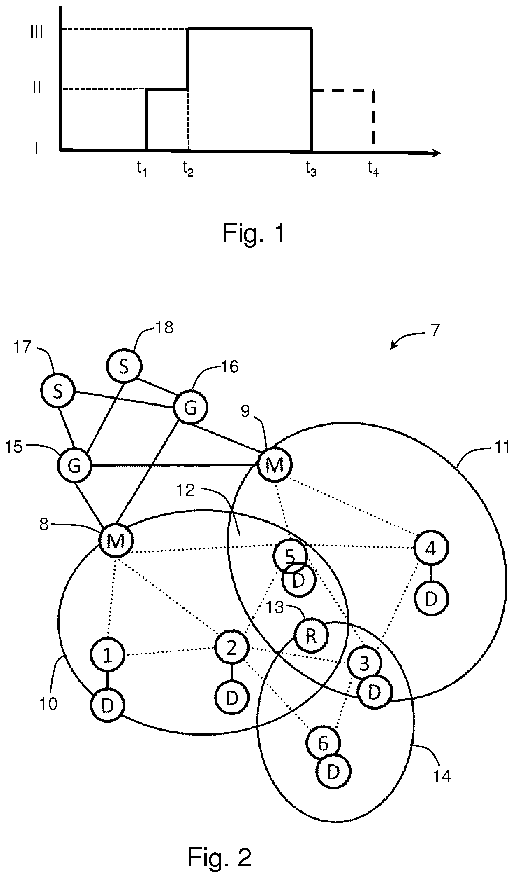

Im Diagramm der Figur 1 sind Betriebszustände eines erfindungsgemäßen Netzknotens eines beliebigen Kommunikationsnetzes dargestellt, die der Netzknoten im Laufe der Zeit wechselweise einnimmt. Der Netzknoten ist mittels externer, vom Netzknoten empfangener Steuersignale zumindest teilweise steuerbar. Innerhalb des Kommunikationsnetzes hat der Netzknoten die Funktion, Datensignale aber auch Steuersignale an andere Netzknoten oder Netzkomponenten wie beispielsweise eine das Kommunikationsnetz steuernde Netzwerksteuereinheit zu versenden. Darüber hinaus kann der Netzknoten auch zum Versenden von Datensignalen an eine Schnittstelle des Kommunikationsnetzes oder über die Schnittstelle an einen externen Server eingerichtet sein. Mit den Datensignalen können Daten versendet werden, welche dem Netzknoten mittels von ihm empfangener Datensignale übertragen worden sind. Der Netzknoten kann auch dazu eingerichtet sein, derartige empfangene Daten zunächst in einem internen Speicher zu speichern und erst nach einer gewissen Zeit weiter zu versenden. Oder aber der Netzknoten generiert die zu versendenden Daten selber, wofür er mit entsprechenden Vorrichtungen wie Sensoren, Messvorrichtungen oder optischen oder akustischen Aufzeichnungsgeräten versehen sein kann. Vom Netzknoten generierte Daten können bei einigen Ausführungen auch in einem Speicher des Netzknotens für einige Zeit zwischengespeichert werden, bevor sie der Netzknoten versendet.

Zu Beginn befindet sich der Netzknoten in einem ersten Betriebszustand I. In diesem Betriebszustand I können Steuersignale und Datensignale vom Netzknoten weder empfangen noch gesendet werden. Sofern vom Netzknoten Daten generiert werden, werden diese im ersten Betriebszustand I des Netzknotens gespeichert, um sie später versenden zu können. Diese Wechselbedingung tritt in der Figur 1 zum Zeitpunkt ti ein. Als Reaktion auf diese Wechselbedingung wechselt der Netzknoten vom ersten Betriebszustand I in einen zweiten Betriebszustand II. Im zweiten Betriebszustand II ist der Netzknoten in der Lage, externe Steuersignale zumindest zu empfangen, er kann jedoch nach wie vor keine Datensignale versenden. So kann der Netzknoten im zweiten Betriebszustand II insbesondere derartige Steuersignale empfangen, die einen Wechsel seines Betriebszustandes entweder zurück in den ersten Betriebszustand I oder in einen dritten Betriebszustand III veranlassen. Der Netzknoten kann im zweiten Betriebszustand II aber auch dazu eingerichtet sein, Steuersignale zu versenden, um beispielsweise als Zwischenstation zu dienen und empfangene Steuersignale an ihren vorgesehenen Endempfänger weiterzuleiten. Vom Netzknoten generierte Daten werden auch im zweiten Betriebszustand II des Netzknotens lediglich gespeichert. Insgesamt befindet sich der Netzknoten im zweiten Betriebszustand II in einem Bereitschaftsmodus, in welchem er weitere Steuerbefehle abwartet um bedarfsweise schnell in den dritten Betriebszustand III, der einem aktiven Modus des Netzknotens entspricht, versetzt werden zu können. Da sich der Netzknoten im zweiten Betriebszustand II in einem Bereitschaftsmodus befindet, ist sein Energieverbrauch größer als im inaktiven Modus des ersten Betriebszustands I.

Als Wechselbedingung, welche den Übergang des Netzknotens vom ersten Betriebszustand I in den zweiten Betriebszustand II bedingt oder auslöst, können verschiedene Umstände oder Ereignisse vorgesehen sein, wie zum Beispiel das Verstreichen einer vorgegebenen Zeitspanne oder das Empfangen eines Aktivierungssignals oder ein manueller Wechselbefehl oder das Einsetzen einer Stromversorgung des Netzknotens. Je nach den spezifischen Erfordernissen der konkreten Ausgestaltung der Erfindung kann die Wechselbedingung geeignet gewählt werden.

Sobald der sich im zweiten Betriebszustand II befindliche Netzknoten ein entsprechendes Steuersignal erhält, wechselt er in den dritten Betriebszustand III über. In der Figur 1 ist dies zum Zeitpunkt t₂ der Fall. Im dritten Betriebszustand III ist der Netzknoten nunmehr in der Lage, nicht nur Steuersignale sondern auch Datensignale zu empfangen und zu versenden. Insbesondere kann der Netzknoten eventuelle zuvor von ihm erzeugte und zwischengespeicherte Daten nun mittels eines Datensignals versenden, wobei die Daten mit Versenden in seinem Speicher gelöscht werden können. Der dritte Betriebszustand III entspricht wie bereits erwähnt einem aktiven Modus des Netzknotens, in welchem er seine eigentliche Funktion der Kommunikation von Daten oder Datensignalen erfüllt. Folglich ist der Energieverbrauch des Netzknotens im dritten Betriebszustand III größer als im zweiten Betriebszustand II, der einem Bereitschaftsmodus entspricht:
Mit Empfangen eines entsprechenden Steuersignals zum Zeitpunkt t₃ wechselt der Netzknoten vom dritten Betriebszustand III entweder wieder in den zweiten Betriebszustand II oder in den ersten Betriebszustand I zurück. In der Figur 1 ist der Fall, in welchem der Netzknoten nach dem Zeitpunkt t₃ in den zweiten Betriebszustand II wechselt, gestrichelt gezeichnet. Nach anschließendem Empfang eines weiteren entsprechenden Steuersignals zum Zeitpunkt t₄ wechselt der Netzknoten entweder wie in der Figur 1 dargestellt in den ersten Betriebszustand I zurück, oder er kann wieder in den dritten Betriebszustand III überführt werden, von welchem er zu einem noch späteren Zeitpunkt wieder wahlweise in den zweiten Betriebszustand II oder den ersten Betriebszustand I überführt werden kann. Wechselt der Netzknoten entweder vom zweiten Betriebszustand II oder vom dritten Betriebszustand III in den ersten Betriebszustand I, so kann er den ersten Betriebszustand I erst wieder mit Erfolgen oder Eintreten der Wechselbedingung verlassen, woraufhin er in den zweiten Betriebszustand II wechselt. Auf diese Weise ist ein beliebiges Wechseln des Netzknotens zwischen dem ersten Betriebszustand I, dem zweiten Betriebszustand II und dem dritten Betriebszustand III möglich. Insbesondere kann der Netzknoten für Zeiten, in denen er im Kommunikationsnetz nicht benötigt wird, in den ersten Betriebszustand I überführt werden, da der Netzknoten in diesem Betriebszustand den geringsten Energieverbrauch aufweist. In gleicher Weise kann der Netzknoten in den Betriebszustand II überführt werden, wenn er im Kommunikationsnetz nicht benötigt wird, aber für Steuersignale ansprechbar sein soll. Dadurch lässt sich der gesamte Energieverbrauch des Netzknotens und folglich auch derjenige des Kommunikationsnetzes zu dem der Netzknoten gehört erheblich verringern.

Als Beispiel für ein Kommunikationsnetz mit erfindungsgemäßen Netzknoten ist in der Figur 2 ein Kommunikationsnetz 7 schematisch dargestellt. Bei diesem Kommunikationsnetz 7 handelt es sich lediglich um ein bevorzugtes Ausführungsbeispiel zur Veranschaulichung der vorliegenden Erfindung, das in keinster Weise als einschränkend für ein erfindungsgemäßes Kommunikationsnetz angesehen werden kann. So weist das Kommunikationsnetz 7 der Figur 2 beispielsweise mehrere Netzknoten 1, 2, 3, 4, 5, 6 mit Sensoren D auf, obwohl ein erfindungsgemäßes Kommunikationsnetz auch nur einen Netzknoten gemäß der vorliegenden Erfindung aufweisen kann, der keinen Sensor umfassen muss.

Bei dem in der Figur 2 dargestellten Kommunikationsnetz 7 handelt es sich vorliegend um ein drahtloses Sensornetz. Wie bereits erwähnt, umfasst das Kommunikationsnetz 7 sechs Netzknoten 1, 2, 3, 4, 5, 6. Jeder dieser Netzknoten 1, 2, 3, 4, 5, 6 weist wiederum einen jeweiligen Sensor D auf. Ferner umfasst das Kommunikationsnetz 7 zwei Netzwerksteuereinheiten bzw. Netzwerkmaster 8 und 9, die jeweils voneinander unabhängig sind. Dabei ist vom Netzwerkmaster 8 ein Bereich 10 mit Steuersignalen erreichbar, welcher die Netzknoten 1, 2 und 5 abdeckt. Entsprechend ist vom Netzwerkmaster 9 ein Bereich 11 mit Steuersignalen erreichbar, welcher die Netzknoten 3, 4 und 5 abdeckt. Beide Bereiche 10 und 11 schneiden sich in einem Überlappungsbereich 12, in welchem sich der Netzknoten 5 befindet. Hingegen wird der Netzknoten 6 weder vom Bereich 10 noch vom Bereich 11 erfasst. Aus diesem Grund weist das Kommunikationsnetz 7 im Überlappungsbereich 12 außerdem einen Verstärkerknoten 13 auf, der Steuersignale der Netzwerkmaster 8 und 9 verstärkt, so dass diese nunmehr einen zusätzlichen Bereich 14 erreichen können, in welchem sich der ansonsten unerreichbare Netzknoten 6 befindet. Netzknoten 1, 2, 3, 4, 5, 6 sowie Netzwerkmaster 8 und 9 können über drahtlose Kommunikationsverbindungen miteinander Datensignale austauschen, was in der Figur 2 durch gepunktete Linien symbolisiert wird. Über drahtgebundene und in der Figur 2 durch ausgezogene Linien dargestellte Kommunikationsverbindungen ist jeder der Netzwerkmaster 8 und 9 mit zwei Schnittstellen 15 und 16 verbunden, und jede der beiden Schnittstellen 15 und 16 steht wiederum mit zwei Servern 17 und 18 in kommunikativer Verbindung.

Das Kommunikationsnetz 7 wird von den beiden Netzwerkmastern 8 und 9 gesteuert, indem diese Steuersignale an die Netzknoten 1, 2, 3, 4, 5 und 6 senden. Dabei wechseln die Netzknoten 1, 2, 3, 4, 5, 6 entsprechend den empfangenen Steuersignalen zwischen ihren drei Betriebszuständen und empfangen und versenden Datensignale gemäß von den Netzwerkmastern 8 und 9 erstellten Ablaufplänen. Von den Netzwerkmastern 8 und 9 empfangene Daten werden von diesen über die Schnittstellen 15 und 16 zur weiteren Verarbeitung an die Server 17 und 18 übertragen. Der Eingang eines Datensignals bei einem Netzknoten 1, 2, 3, 4, 5, 6 oder Netzwerkmaster 8 und 9 wird von diesen mittels einer Bestätigungsnachricht an den jeweiligen Sender bestätigt.

### Bezugszeichenliste

- 1.: Netzknoten
- 2.: Netzknoten
- 3.: Netzknoten
- 4.: Netzknoten
- 5.: Netzknoten
- 6.: Netzknoten
- 7.: Kommunikationsnetz
- 8.: Netzwerkmaster
- 9.: Netzwerkmaster
- 10.: von Netzwerkmaster abgedeckter Bereich
- 11.: von Netzwerkmaster abgedeckter Bereich
- 12.: Überlappungsbereich
- 13.: Verstärkerknoten
- 14.: zusätzlicher Bereich
- 15.: Schnittstelle
- 16.: Schnittstelle
- 17.: Server
- 18.: Server

## Patentansprüche

1. Kommunikationsnetz (7) mit
wenigstens einer Netzwerksteuereinheit (8, 9) die dazu eingerichtet ist, Steuersignale an Netzknoten (1, 2, 3, 4, 5, 6) des Kommunikationsnetzes (7) zu übertragen, sowie
Netzknoten (1, 2, 3, 4, 5, 6), die zum Empfangen und Weiterleiten von Steuersignalen an andere Netzknoten des Kommunikationsnetzes (7) und zum Empfangen und Versenden von Datensignalen eingerichtet sind und deren Betrieb durch empfangene Steuersignale zumindest teilweise steuerbar ist, wobei die Netzknoten (1, 2, 3, 4, 5, 6) eingerichtet sind, wechselweise
- einen ersten Betriebszustand (I) einzunehmen, in welchem Steuersignale und Datensignale vom Netzknoten (1, 2, 3, 4, 5, 6) weder empfangbar noch versendbar sind,
- einen zweiten Betriebszustand (II) einzunehmen, in welchem Steuersignale vom Netzknoten (1, 2, 3, 4, 5, 6) empfangbar und an andere Netzknoten (1, 2, 3, 4, 5, 6) versendbar und Datensignale weder empfangbar noch versendbar sind, wobei ein Netzknoten (1, 2, 3, 4, 5, 6) bei Erfolgen einer Wechselbedingung vom ersten Betriebszustand (I) in den zweiten Betriebszustand (II) wechselt, und
- einen dritten Betriebszustand (III) einzunehmen, in welchem Datensignale vom Netzknoten (1, 2, 3, 4, 5, 6) empfangbar und versendbar sind, wobei der Netzknoten (1, 2, 3, 4, 5, 6) bei Empfangen eines entsprechenden Steuersignals vom zweiten Betriebszustand (II) in den dritten Betriebszustand (III) wechselt.

2. Kommunikationsnetz (7) nach Anspruch 1, bei dem die Wechselbedingung mit Verstreichen einer vorgegebenen Zeitspanne oder mit Einsetzen einer Stromversorgung des Netzknotens (1, 2, 3, 4, 5, 6) erfolgt.

3. Kommunikationsnetz (7) nach Anspruch 1 oder 2, wobei der Netzknoten (1, 2, 3, 4, 5, 6) für eine drahtlose Kommunikation eingerichtet ist.

4. Kommunikationsnetz (7) nach einem der vorhergehenden Ansprüche, wobei der Netzknoten (1, 2, 3, 4, 5, 6) wenigstens eine Sende-/Empfangsvorrichtung und/oder wenigstens eine Steuereinheit und/oder wenigstens einen Speicher und/oder wenigstens einen Sensor und/oder wenigstens eine Messvorrichtung und/oder wenigstens eine optische Vorrichtung und/oder wenigstens eine akustische Vorrichtung und/oder wenigstens einen Aktuator und/oder wenigstens ein Ventil aufweist.

5. Kommunikationsnetz (7) nach einem der vorhergehenden Ansprüche, bei dem es sich um ein drahtloses Kommunikationsnetz und/oder ein Sensornetz handelt.

6. Verfahren zum Betreiben eines Kommunikationsnetzes (7) mit wenigstens einer Netzwerksteuereinheit (8, 9) die dazu eingerichtet ist, Steuersignale an Netzknoten (1, 2, 3, 4, 5, 6) des Kommunikationsnetzes (7) zu übertragen, sowie Netzknoten (1, 2, 3, 4, 5, 6), die zum Empfangen und Weiterleiten von Steuersignalen an andere Netzknoten des Kommunikationsnetzes (7) und zum Empfangen und Versenden von Datensignalen eingerichtet sind und deren Betrieb durch empfangene Steuersignale zumindest teilweise steuerbar ist, wobei
- die Netzknoten (1, 2, 3, 4, 5, 6) anfänglich in einen ersten Betriebszustand (I) versetzt werden, in welchem Steuersignale und Datensignale vom Netzknoten (1, 2, 3, 4, 5, 6) weder empfangbar noch versendbar sind,
- ein Netzknoten (1, 2, 3, 4, 5, 6) bei Erfolgen einer Wechselbedingung vom ersten Betriebszustand (I) in einen zweiten Betriebszustand (II) wechselt, in welchem Steuersignale vom Netzknoten (1, 2, 3, 4, 5, 6) empfangbar und an andere Netzknoten (1, 2, 3, 4, 5, 6) versendbar und Datensignale weder empfangbar noch versendbar sind, und
- ein Netzknoten (1, 2, 3, 4, 5, 6) bei Empfangen eines entsprechenden Steuersignals vom zweiten Betriebszustand (II) in einen dritten Betriebszustand (III) wechselt, in welchem Datensignale vom Netzknoten (1, 2, 3, 4, 5, 6) empfangbar und versendbar sind.

7. Verfahren nach Anspruch 6, bei dem für das Erfolgen der Wechselbedingung ein Verstreichen einer vorgegebenen Zeitspanne oder ein Einsetzen einer Stromversorgung des Netzknotens (1, 2, 3, 4, 5, 6) vorgesehen wird.

8. Verfahren nach einem der Ansprüche 6 oder 7, wobei die Steuersignale und Datensignale zur Minimierung eines Energieverbrauchs des Netzknotens (1, 2, 3, 4, 5, 6) vorgesehen werden.

9. Verfahren nach Anspruch 8, bei dem die Übertragung von Datensignalen zwischen Netzknoten (1, 2, 3, 4, 5, 6) mit Hilfe eines Steuersignals synchronisiert wird.

10. Verfahren nach einem der Ansprüche 8 oder 9, bei dem eine Topologie wenigstens eines Teilbereiches des Kommunikationsnetzes (7) in Abhängigkeit von der Zeit geändert wird.

11. Computerprogrammprodukt mit Steuerbefehlen, die bei Ausführung durch einen Prozessor ein Verfahren nach einem der Ansprüche 6-10 durchführen.

## Claims

1. A communication network (7) having
at least one network control unit (8, 9), which is configured to transmit control signals to network nodes (1, 2, 3, 4, 5, 6) of the communication network (7), and
network nodes (1, 2, 3, 4, 5, 6), which are configured for receiving and forwarding control signals to other network nodes of the communication network (7) and for receiving and sending data signals and the operation of which is at least partially controllable by received control signals, wherein the network nodes (1, 2, 3, 4, 5, 6) are configured alternately
- to assume a first operating state (I), in which control signals and data signals can neither be received nor be sent by the network node (1, 2, 3, 4, 5, 6),
- to assume a second operating state (II), in which control signals can be received by network node (1, 2, 3, 4, 5, 6) and can be sent to other network nodes (1, 2, 3, 4, 5, 6) and data signals can neither be received nor sent, wherein a network node (1, 2, 3, 4, 5, 6) changes when a change condition occurs from the first operating state (I) to the second operating state (II), and
- to assume a third operating state (III), in which data signals can be received and can be sent by the network node (1, 2, 3, 4, 5, 6), wherein the network node (1, 2, 3, 4, 5, 6) changes when a corresponding control signal is received from the second operating state (II) to the third operating state (III).

2. The communication network (7) according to Claim 1, in which the change condition occurs with the passage of a predetermined time span or with the introduction of a current supply of the network node (1, 2, 3, 4, 5, 6).

3. The communication network (7) according to Claim 1 or 2, wherein the network node (1, 2, 3, 4, 5, 6) is configured for a wireless communication.

4. The communication network (7) according to any one of the preceding claims, wherein the network node (1, 2, 3, 4, 5, 6) has at least one transmission-/reception device and/or at least one control unit and/or at least one memory and/or at least one sensor and/or at least one measuring device and/or at least one optical device and/or at least one acoustic device and/or at least one actuator and/or at least one valve.

5. The communication network (7) according to any one of the preceding claims, which is a wireless communication network and/or a sensor network.

6. A method for operating a communication network (7) with at least one network control unit (8, 9), which is configured to transmit control signals to network nodes (1, 2, 3, 4, 5, 6) of the communication network (7), and network nodes (1, 2, 3, 4, 5, 6), which are configured for receiving and forwarding control signals to other network nodes of the communication network (7) and for receiving and sending data signals and the operation of which is at least partially controllable by received control signals, wherein
- the network nodes (1, 2, 3, 4, 5, 6) are initially moved into a first operating state (I), in which control signals and data signals can neither be received nor sent by the network node (1, 2, 3, 4, 5, 6),
- a network node (1, 2, 3, 4, 5, 6) changes when a change condition occurs from the first operating state (I) to a second operating state (II), in which control signals can be received by the network node (1, 2, 3, 4, 5, 6) and can be sent to other network nodes (1, 2, 3, 4, 5, 6) and data signals can neither be received nor can be sent, and
- a network node (1, 2, 3, 4, 5, 6) changes when a corresponding control signal is received from the second operating state (II) to a third operating state (III), in which data signals can be received and can be sent by the network node (1, 2, 3, 4, 5, 6).

7. The method according to Claim 6, in which a passage of a predetermined time span or an introduction of a current supply of the network node (1, 2, 3, 4, 5, 6) is provided for the occurrence of the change condition.

8. The method according to any one of Claims 6 or 7, wherein the control signals and data signals are provided for minimizing an energy consumption of the network node (1, 2, 3, 4, 5, 6).

9. The method according to Claim 8, in which the transmission of data signals between network nodes (1, 2, 3, 4, 5, 6) is synchronized with the aid of a control signal.

10. The method according to any one of Claims 8 or 9, in which a topology at least of one sub-region of the communication network (7) is changed as a function of time.

11. A computer program product with control commands, which carry out a method according to any one of Claims 6-10 when carried out by a processor.

## Revendications

1. Réseau de communication (7), avec
au moins une unité de commande de réseau (8, 9) qui est agencée pour transmettre des signaux de commande à des nœuds de réseau (1, 2, 3, 4, 5, 6) du réseau de communication (7), ainsi
qu'avec des nœuds de réseau (1, 2, 3, 4, 5, 6) qui sont agencés pour recevoir et faire suivre des signaux de commande à d'autres nœuds de réseau du réseau de communication (7) et pour recevoir et envoyer des signaux de données, et dont le fonctionnement peut être commandé au moins partiellement par des signaux de commande reçus, les nœuds de réseau (1, 2, 3, 4, 5, 6) étant agencés pour, alternativement,
- adopter un premier état de fonctionnement (I) dans lequel des signaux de commande et des signaux de données ne peuvent être ni reçus ni envoyés par le nœud de réseau (1, 2, 3, 4, 5, 6),
- adopter un deuxième état de fonctionnement (II) dans lequel des signaux de commande peuvent être reçus par le nœud de réseau (1, 2, 3, 4, 5, 6) et être envoyés à d'autres nœuds de réseau (1, 2, 3, 4, 5, 6), et des signaux de données ne peuvent être ni reçus ni envoyés, un nœud de réseau (1, 2, 3, 4, 5, 6) passant du premier état de fonctionnement (I) au deuxième état de fonctionnement (II) lors de la survenue d'une condition de changement, et
- adopter un troisième état de fonctionnement (III) dans lequel des signaux de données peuvent être reçus et envoyés par le nœud de réseau (1, 2, 3, 4, 5, 6), le nœud de réseau (1, 2, 3, 4, 5, 6) passant du deuxième état de fonctionnement (II) au troisième état de fonctionnement (III) lors de la réception d'un signal de commande correspondant.

2. Réseau de communication (7) selon la revendication 1, dans lequel la condition de changement survient avec l'écoulement d'une période de temps prescrite ou avec la mise en œuvre d'une alimentation électrique du nœud de réseau (1, 2, 3, 4, 5, 6).

3. Réseau de communication (7) selon la revendication 1 ou 2, le nœud de réseau (1, 2, 3, 4, 5, 6) étant agencé pour une communication sans fil.

4. Réseau de communication (7) selon l'une des revendications précédentes, le nœud de réseau (1, 2, 3, 4, 5, 6) comportant au moins un dispositif d'émission/réception et/ou au moins une unité de commande et/ou au moins une mémoire et/ou au moins un capteur et/ou au moins un dispositif de mesure et/ou au moins un dispositif optique et/ou au moins un dispositif acoustique et/ou au moins un actionneur et/ou au moins une soupape.

5. Réseau de communication (7) selon l'une des revendications précédentes, dans lequel il s'agit d'un réseau de communication sans fil et/ou d'un réseau de capteurs.

6. Procédé de fonctionnement d'un réseau de communication (7) avec au moins une unité de commande de réseau (8, 9) qui est agencée pour transmettre des signaux de commande à des nœuds de réseau (1, 2, 3, 4, 5, 6) du réseau de communication (7), ainsi qu'avec des nœuds de réseau (1, 2, 3, 4, 5, 6) qui sont agencés pour recevoir et faire suivre des signaux de commande à d'autres nœuds de réseau du réseau de communication (7), et pour recevoir et envoyer des signaux de données, et dont le fonctionnement peut être commandé au moins partiellement par des signaux de commande reçus,
- les nœuds de réseau (1, 2, 3, 4, 5, 6) étant initialement amenés vers un premier état de fonctionnement (I) dans lequel des signaux de commande et des signaux de données ne peuvent être ni reçus ni envoyés par le nœud de réseau (1, 2, 3, 4, 5, 6),
- un nœud de réseau (1, 2, 3, 4, 5, 6) passant, lors de la survenue d'une condition de changement, du premier état de fonctionnement (I) à un deuxième état de fonctionnement (II) dans lequel des signaux de commande peuvent être reçus par le nœud de réseau (1, 2, 3, 4, 5, 6) et peuvent être envoyés à d'autres nœuds de réseau (1, 2, 3, 4, 5, 6), et des signaux de données ne peuvent être ni reçus ni envoyés, et
- un nœud de réseau (1, 2, 3, 4, 5, 6) passant, lors de la réception d'un signal de commande correspondant, du deuxième état de fonctionnement (II) à un troisième état de fonctionnement (III) dans lequel des signaux de données peuvent être reçus et envoyés par le nœud de réseau (1, 2, 3, 4, 5, 6).

7. Procédé selon la revendication 6, dans lequel, pour la survenue de la condition de changement, il est prévu un écoulement d'une période de temps prescrite ou une mise en œuvre d'une alimentation électrique du nœud de réseau (1, 2, 3, 4, 5, 6).

8. Procédé selon l'une des revendications 6 ou 7, les signaux de commande et les signaux de données étant prévus pour minimiser une consommation d'énergie du nœud de réseau (1, 2, 3, 4, 5, 6).

9. Procédé selon la revendication 8, dans lequel la transmission de signaux de données entre des nœuds de réseau (1, 2, 3, 4, 5, 6) est synchronisée à l'aide d'un signal de commande.

10. Procédé selon l'une des revendications 8 ou 9, dans lequel une topologie d'au moins une zone partielle du réseau de communication (7) est modifiée en fonction du temps

11. Produit de programme informatique avec des instructions de commande qui, quand elles sont exécutées par un processeur, réalisent un procédé selon l'une des revendications 6 à 10.
